# EUROPÄISCHE PATENTSCHRIFT

(11) **EP 4 426 532 B1**
(45) Veröffentlichungstag und Bekanntmachung des Hinweises auf die Patenterteilung: **08.10.2025**
(21) Anmeldenummer: 22814310.3
(22) Anmeldetag: 04.11.2022
(51) Int. Cl.: B29B 17/02, B29B 17/00, B29B 17/04, B29K 23/00, B29L 31/00

(54) **VERFAHREN ZUM RECYCLING VON POLYOLEFIN-BEHÄLTERN**
METHOD FOR RECYCLING POLYOLEFIN CONTAINERS
PROCÉDÉ DE RECYCLAGE DE RÉCIPIENTS EN POLYOLÉFINE

(30) Priorität: 05.11.2021 CH 0705092021
(43) Veröffentlichungstag der Anmeldung: 11.09.2024
(73) Patentinhaber: Alpla Werke Alwin Lehner GmbH & Co. KG, 6971 Hard (AT)
(72) Erfinder: AMANN, Cornelius, 6822 Schnifis (AT); HEYDE, Michael, 51427 Bergisch Gladbach (DE)
(74) Vertreter: Swisspat Riederer Hasler Patentanwälte AG
(86) Internationale Anmeldenummer: PCT/EP2022/080835
(87) Internationale Veröffentlichungsnummer: WO 2023/079085

(56) Entgegenhaltungen:
- EP-A1- 2 384 873
- WO-A1-2012/117250
- WO-A1-92/22380
- DE-A1- 102016 116 742
- KR-B1- 101 229 089
- WRAP: "Research & development to improve the recyclability of plastic milk bottles", WRAP PROJECT MDP025-003, 1 January 2011 (2011-01-01), XP055621989, Retrieved from the Internet <URL:http://www.wrap.org.uk/sites/files/wrap/Milk%20Bottle%20R%20and%20D%20report.pdf> [retrieved on 20190913]

## Beschreibung

### Gebiet der Erfindung

Die Erfindung betrifft ein Verfahren zum Recycling von Polyolefin-Behältern gemäss Oberbegriff des Anspruchs 1

### Stand der Technik

Polyolefine gehören zu den meistverbreiteten Kunststoffarten der Welt, und das Recycling dieser Kunststoffart ist von besonderer Bedeutung für die Nutzung bestehender Ressourcen. Verunreinigungen im Material führen zu einer beeinträchtigenden Verfärbung, zu einem unangenehmen Geruch und zu Verunreinigungen, die einen weitere Nutzung im Lebensmittelbereich nicht zulassen. Stand der Technik sind geschlossene Recycling-Kreisläufe in denen zum Beispiel HDPE-Milchflaschen erneut zur Erzeugung von Milchflaschen verwendet werden. Das Recycling gelingt nur, weil ein klar definierter Eingangsstrom ohne die üblichen Kontaminierungen für das Recycling herangezogen wird. Mit den üblichen Kontaminationen, welche beispielsweise restentleerte Waschmittelbehälter, Treibstoffkanister, Shampoos und andere Non-Food Verpackungen aufweisen, ist diese hochwertige Rückführung ohne Kontaminierungen, wenn überhaupt möglich, sehr aufwendig. Insbesondere der strenge Geruch schreckt viele Verpackungshersteller davor ab, Polyolefin Regenerate zu verwenden.

Stand der Technik sind Verfahren, welche die rezyklierten Granulate in einem Luftstrom, in einem Vakuum, in einem Stickstoffstrom oder in Dampf durchströmen und so desodorieren. Insbesondere Dampf ist für die Entfernung von Gerüchen effektiv, wie dies in der WO 2013/072035 A1 offenbart ist. Die Entfernung der Gerüche ist meist umso intensiver, je höher die Temperatur ist, die für die Desodorierung eingesetzt wird. Bei 120 bis 130°C ist jedoch eine Obergrenze erreicht, da die Granulate oberhalb dieser Temperatur aufschmelzen und verkleben.

Auch in der DE 10 2016 116742 A1, der EP 2 384 873 A1 der WO 92/22380 A1, KR 101 229 089 B1, der WO 2012/117250 A1 und dem Fachartikel "Research & development to improve the recyclability of plastic milk bottles", Wrap Project MDP025-003 vom 1.1.2022 sind verschiedene Möglichkeiten zur Geruchsentfernung aus den rezyklierten Granulaten offenbart. Die Geruchsentfernung kann durch eine Behandlung bei Temperaturen zwischen 50 und 155 °C erfolgen. Durch Anlegen eines Vakuums kann die Abtrennung von Migrationsstoffen positiv beeinflusst werden. Die Abtrennung von Migrationsstoffen kann auch durch eine Behandlung mit einem organischen Lösungsmittel oder Wasser oder durch Entgasung in der Vakuumzone eines Extruders erfolgen.

Zur Reinigung werden Polyolefinverpackungen, entweder als Flasche oder gemahlen als Flake, auch intensiv gewaschen, um anhaftende Kleber, Labels, Sleeves oder Rückstände des Füllgutes zu entfernen. Diese Wäsche wird meist in einer kalten Vorwäsche und einer heißen Nachwäsche ca. (40°C bis 90°C) durchgeführt. Die Temperatur soll speziell helfen sogenannte Heißkleber, wie diese für das Aufbringen der Etiketten verwendet werden, zu entfernen. Als Waschwasser wird meist eine 1 bis 3%ige NaOH Lauge verwendet, die unterstützt durch Tenside den Waschprozess intensivieren soll. Der Waschprozess kann jedoch nur Verunreinigungen an der Oberfläche des Materials entfernen, nicht aber Verunreinigungen, welche tief in das Material eingedrungen sind.

### Aufgabe der Erfindung

Aus den Nachteilen des beschriebenen Stands der Technik resultiert die Aufgabe rezyklierte Polyolefine möglichst vollständig von unangenehmen Gerüchen zu befreien, damit ein Mischstrom aus unterschiedlichen Polyolefin-Verpackungen rezykliert werden kann und die aus dem Mischstrom neu hergestellten Flakes und Behälter keine oder eine sehr geringe Geruchsbelastung aufweisen.

### Beschreibung

Die Lösung der gestellten Aufgabe gelingt bei einem Verfahren zum Recycling von Polyolefin durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Erfindung zeichnet sich bevorzugt dadurch aus, dass der Reinigungsschritt eine Perkolation c1 der Flakes mit Natronlauge bei einer Temperatur < 60 °C und eine an den Schritt c1 anschliessende erste Desodorierung c2 der Flakes mit Dampf umfasst. Die Flakes werden aus der Kaltwäsche in einen Natronlauge-Perkolationsreaktor übergeben, in welchem die Flakes an der Oberfläche mit kalter Natronlauge (Temperatur < 60 °C) benetzt werden, um Kleberreste und an der Oberfläche befindliche Verunreinigungen anzulösen und durch den Dampf leichter abgelöst werden zu können. Im Anschluss wird das Gemisch aus Flakes mit Restbeständen von Natronlauge in der Dampfdesodorierung mit einem hohen Anteil an Dampf bedampft, um die flüchtigen und geruchsverursachenden Substanzen mit dem Dampf mitzureißen und resultierend Flakes mit sehr geringem Geruch zu erhalten. Die Kombination aus kalter Natronlauge, dem Dampf und der Hitze nur an der Oberfläche sorgen für sehr gute Reinigungsresultate. Diese können noch verbessert werden, wenn die Dampfzufuhr mehrstufig erfolgt, was dazu führt, dass das Mitreißen der kontaminierenden Substanzen noch effektiver erfolgt.

Die nach der Kaltwäsche noch kalten Flakes nehmen weniger Verunreinigungen auf, da das Material im Inneren noch kalt ist, und die Migration von Geruchsstoffen in das Material im kalten Zustand deutlich geringer ist. Der Dampf, der auf der Oberfläche der Flakes kondensiert, steht in Wechselwirkung mit dem im Überschuss vorbeiströmenden Dampf, sodass Wasser und sonstige Kontaminationen, auch wenn diese einen höheren Siedepunkt als Wasser haben, von den sich wieder lösenden Dampftröpfchen mitgerissen werden.

Die Energie, die durch die Dampfbehandlung verwendet wird, ist nicht verloren, da die Flakes durch den Dampf erwärmt werden und so weniger Energie zum Aufschmelzen und Granulieren verwendet werden muss. Das vom Dampf auf den Flakes auskondensierte und im Überschuss befindliche Wasser mit den Kleberresten wird von den Flakes vor dem Extruder und der Granulierung entfernt. Idealerweise hat der Extruder für die Granulierung eine Entgasung, um zusätzlich noch kleine geruchsintensive Moleküle zu entfernen.

Die Verwendung von heißem Dampf anstelle von einer heißen Lauge hat den positiven Zusatzeffekt, dass große organische Moleküle mit der Lauge abreagieren und in viele kleine geruchsintensive organische Verbindungen aufbrechen, diese Reaktionen mit Dampf jedoch nicht auftreten. Bekannt ist die Verseifung von Fetten und Ölen, welche die Lauge aufspaltet und kleine geruchsintensive Moleküle entstehen. Die Hydrolyse betrifft aber auch andere große Moleküle wie Eiweisse und Kohlehydrate. Eine Lauge kann viele organischen Verbindungen angreifen und diese in geruchsintensive kleine Moleküle aufbrechen. Je heißer die Lauge, umso intensiver die aufbrechenden Reaktionen und umso intensiver die Belastung mit geruchsintensiven Molekülen in der Heißwäsche, welche tief in die Polyestermatrix eindringen können.

In einer besonders bevorzugten Ausführungsform der Erfindung reisst der Dampf in Schritt c2 die Natronlauge von der Oberfläche der Flakes mit. Dadurch werden Dampf und Natronlauge, die mit Verunreinigungen und Klebstoffresten belastet sind, zusammen von den Flakes entfernt.

Zweckmässigerweise werden in einer Separierung h die kontaminierte Natronlauge und der kontaminierte Dampf voneinander getrennt. Dadurch kann der Dampf, bevor er einer Abwasserbehandlung zugeführt wird, seine Wärmeenergie in einem Wärmetauscher abgeben.

Als vorteilhaft erweist es sich, wenn nach dem Schritt e eine zweite Desodorierung f der Regranulate durchgeführt wird. Dadurch wird die Qualität des Regranulats noch weiter verbessert. Beispielsweise kann die zweite Desodorierung in einer konventionellen Entgasungsanlage erfolgen. Hierbei können als Entgasungsmedien Dampf, Stickstoff und Luft dienen, wobei die Einströmung mehrteilig bzw. mehrstufig konzipiert sein kann. Dies hat den Vorteil, dass das Wärmeprofil homogener über die Schütthöhe ist und dadurch die Entgasung nachhaltiger und effektiver ist. Auch ist es möglich, dass der Extruder für die Granulierung eine Entgasung aufweist, um zusätzlich noch kleine geruchsintensive Moleküle zu entfernen.

Zweckmässigerweise werden das Abwasser der Intensivwäsche, die kontaminierte Natronlauge und der kontaminierte Dampf einer Abwasserbehandlung g zugeführt. Der Dampf wird zuvor in einem Wärmetauscher kondensiert und somit können alle drei Abwässer einer gemeinsamen Abwasseraufbereitung zugeführt werden. Alle drei Abwässer weisen ähnliche Kontaminationen auf, nämlich gelöste Klebereste und geruchsintensive gelöste Stoffe.

In einer weiteren bevorzugten Ausführungsform der Erfindung wird die Flakesortierung d vor der Perkolation c1, nach der Perkolation c1 oder nach der ersten Desodorierung c2 durchgeführt. Diese Ausführungsformen der unterschiedlichen Position der Flakesortierungen in dem Verfahrensablauf haben den Effekt, dass äusserst farbreine Fraktionen entstehen und somit sogenannte «Cross contaminations» weitgehend vermieden werden können.

Als vorteilhaft hat es sich erwiesen, wenn die Intensivwäsche b mit Wasser bei einer Temperatur < 60°C durchgeführt wird. Dadurch werden die Behälter bzw. Flakes grob gereinigt und wasserlösliche Verunreinigungen werden entfernt. Die Flakes besitzen nach der Intensivwäsche eine niedrige Temperatur, wodurch Geruchsstoffe in die Polymermatrix nicht eindringen.

In einer weiteren besonders bevorzugten Ausführungsform der Erfindung gibt der kontaminierte Dampf in einem Wärmetauscher i seine Restwärme an zur Dampferzeugung vorgesehenes Wasser zur Vorerwärmung ab. Der überschüssige Dampf und seine Energie, sowie die enthaltenen kleinen geruchsintensiven Moleküle werden durch den Wärmetauscher geführt und die Energie zur weiteren Dampfherstellung genutzt. Das Kondensat inklusive der geruchsintensiven Stoffe und Kontaminationen wird einer Abwasserbehandlung zugeführt

Als zweckdienlich hat es sich erwiesen, wenn das vorgewärmte Wasser in einem Dampferzeuger j zu Dampf verdampft wird. Dadurch lässt sich die Herstellung des Dampfes zur Aufnahme der geruchsintensiven Moleküle besonders energiesparend umsetzen.

Die Erfindung zeichnet sich auch bevorzugt dadurch aus, dass die Flakes durch den Schritt c2 für den Schritt e vorgewärmt werden. Das Aufschmelzen der Flakes während der Extrusion erfolgt daher möglichst energiesparend, wodurch der Gesamtenergiebedarf des Recycling-Verfahrens weiter reduziert wird.

Als vorteilhaft erweist es sich, wenn nach dem Schritt c oder d ein Spülen und Entwässern k der Flakes erfolgt. Ziel dieses Schrittes ist es zu verhindern, dass Reste der Natronlauge in die folgenden Verfahrensschritte verschleppt werden und dass Flakes möglichst trocken weiterverarbeitet werden können.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: Fliessschema eines Recyclingverfahrens in einer ersten Ausführungsform;
- Figur 2:: Fliessschema des Recyclingverfahrens in einer zweiten Ausführungsform und
- Figur 3:: Fliessschema des Recyclingverfahrens in einer dritten Ausführungsform.

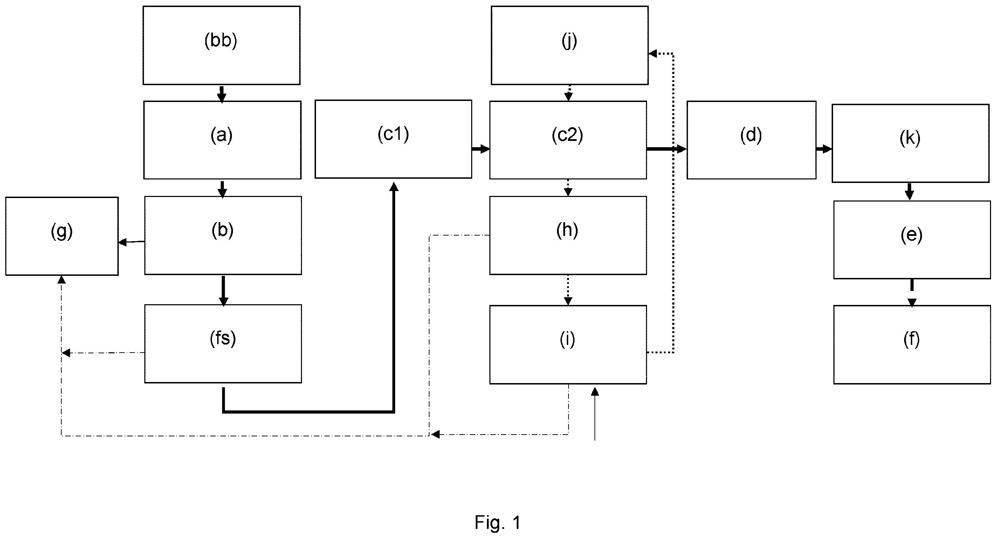

In den Figuren 1 bis 3 ist jeweils ein Fliessschema zum Recycling von Polyolefinbehältern gezeigt. Als Ausgangsstoff dienen für alle drei Ausführungsformen Ballen von gesammelten Polyolefin-Behältern, insbesondere Flaschen, welche einer Wertstoffsammlung zugeführt wurden.

Die Ballen werden geöffnet und die Behälter werden auf ein Förderband vereinzelt (Schritt bb, bale breaking). In Schritt a werden die Behälter einer Farbsortierung zugeführt. Die farbsortierten Behälter werden in einer Intensivwäsche b mit kaltem Wasser (Temperatur < 60°C) gewaschen. Dies erfolgt in einem Friktionswäscher. Die Behälter werden zu Flakes zerkleinert und mechanisch von dem Waschwasser getrennt (Schritt fs, Flake Separierung, Dichtetrennung).

Im Schritt c1 werden die Flakes in einer Perkolation mit kalter Natronlauge benetzt. Dabei werden Kleberückstände, welche von Etiketten stammen und andere Verunreinigungen an der Behälteroberfläche an- bzw. abgelöst. Die kalte Natronlauge weist eine Temperatur < 60 °C auf.

Im Gegensatz zum üblichen Reinigungsschritt mit heisser 1 bis 3%iger Natronlauge bei 40 bis 90 °C ist die Natronlauge kalt bei einer Temperatur < 60 °C. Die heisse Natronlauge löst sogenannte Heisskleber, insbesondere wenn der Waschprozess durch Tenside intensiviert wird, zuverlässig. Der heisse Waschprozess hat jedoch den Nachteil, dass er die Geruchsbelastung der recycelten Flakes verstärkt: Werden die Polyolelfinflakes zusammen mit den Rückständen in den Polyolefinverpackungen, den Klebern und den Lebensmittelresten in der heißen Lauge erhitzt, migrieren bei dieser hohen Temperatur kleine organische Verbindungen in die Polyolefinmatrix und sorgen für eine noch intensivere Geruchsbelastung. Die Migration dieser kleinen Moleküle in das Material ist von der Temperatur abhängig und treibt als negativer Effekt der Oberflächenreinigung kleine geruchsintensive Moleküle in das Material. Besonders betroffen sind geruchsintensive organische Säuren, wie die Buttersäure, Valeriansäure, Aldehyde Octanal, Nonanal, Decanal, Undecanal, Dodecanal, Lactone, gesättigte Mineralölkohlenwasserstoffe (MOSH) und aromatische Mineralölkohlenwasserstoffe (MOAH).

Noch ein Nachteil des heissen Reinigungsschrittes ist, dass sich organische Strukturen in einer Lauge nicht nur gut lösen, sondern auch grosse organische Moleküle mit der Lauge abreagieren und in viele kleine geruchsintensive organische Verbindungen aufbrechen. Bekannt ist die Verseifung von Fetten und Ölen, welche die Lauge aufspaltet und kleine geruchsintensive Moleküle verwandelt. Die Hydrolyse betrifft aber auch andere große Moleküle wie Eiweisse und Kohlehydrate: Eine heisse Lauge kann sehr viele organischen Verbindungen angreifen und diese in geruchsintensive kleine Moleküle aufbrechen. Je heißer die Lauge, umso intensiver sind die aufbrechenden Reaktionen und umso intensiver ist die Belastung mit geruchsintensiven Molekülen in der Heißwäsche. Diese aufgebrochenen kleinen Moleküle sorgen zusätzlich zu den vorhandenen kleinen Molekülen für eine verstärkte Migration in die Polyolefinmatrix und eine dementsprechend grössere Geruchsbelastung in den recycelten Flakes bzw. Granulaten.

Im Anschluss an den Schritt c1 werden die Flakes einer ersten Desodorierung c2 mit Dampf ausgesetzt. Dabei werden die Flakes mit einem hohen Anteil an Dampf bedampft, um die flüchtigen und geruchsverursachenden Substanzen mit dem Dampf mitzureißen und die Flakes von Kleberesten und anderen Verunreinigungen zu säubern. Resultierend daraus werden saubere Flakes mit sehr geringem Geruch erhalten. Es ist also sinnvoller Flakes nach der Intensivwäsche b nicht heiß zu waschen, sondern mit NaOH zu benetzen (perkolieren, c1) und mit Dampf zu reinigen (c2), um den Geruch der Regranulate und Produkte daraus später deutlich zu verbessern.

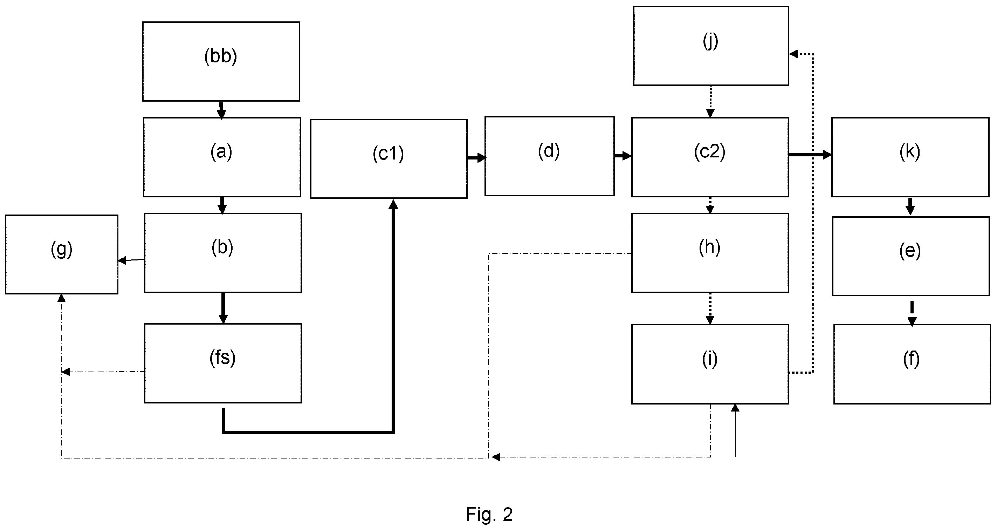

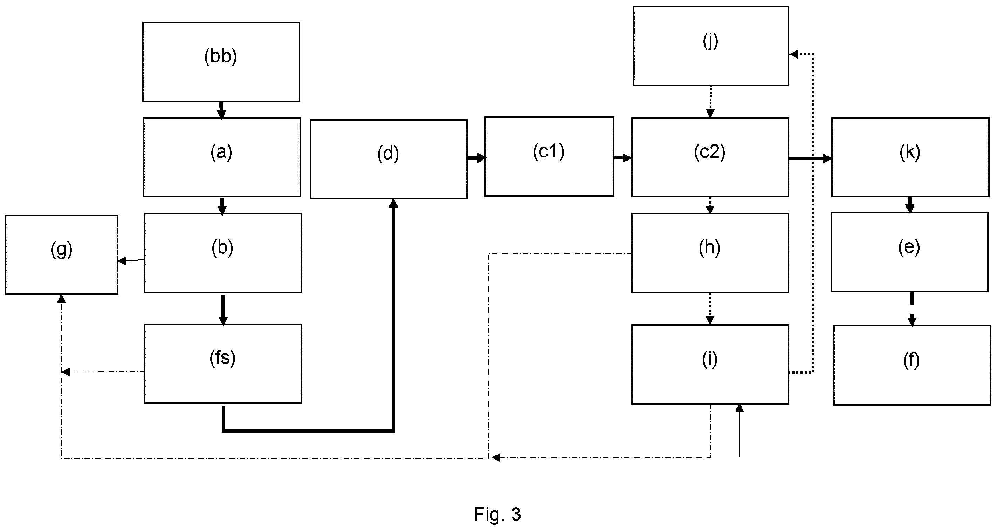

Die gereinigten Flakes werden in einer Flakesortierung d sortiert und im Schritt e extrudiert und zu Regranulaten granuliert. Wie die Figuren 2 und 3 zeigen, kann die Flakesortierung d auch vor dem Schritt c1 oder c2 erfolgen. Dies hat den Effekt, dass äusserst farbreine Fraktionen entstehen und somit sogenannte «Cross contaminations» weitgehend vermieden werden können. Da die Flakes durch den Dampf vorgewärmt sind, benötigen sie beim Aufschmelzen in der Extrusion e nur mehr einen geringen Wärmeeintrag. Die Regranulate können einer zweiten Desodorierung f zusätzlich zur Dampfbehandlung c2, beispielsweise mit einer Entgasungsanlage (Ventinganlage), unterzogen werden.

Nach dem Schritt c oder d erfolgt ein Spülen und Entwässern k der Flakes. Dadurch wird ein Verschleppen von Natronlaugeresten in die folgenden Verfahrensschritte verhindert und die Flakes können möglichst trocken weiterverarbeitet werden.

Der Dampf samt der von der Oberfläche der Flakes mitgerissenen Natronlauge gelangt in eine Separierung h. In der Separierung h wird der Dampf von der Natronlaugeabgetrennt. Die Natronlauge wird genauso wie das Waschwasser der Intensivwäscheeiner Abwasserbehandlung g zugeführt. Der Dampf wird über einen Wärmetauscher i geführt, in welchem er Wärme abgibt und kondensiert. Der mit Verunreinigungen kontaminierte und kondensierte Dampf wird ebenfalls der Abwasserbehandlung g zugeführt.

In dem Wärmetauscher i wird Wasser zur Dampferzeugung durch den gebrauchten Dampf vorgewärmt. Das vorgewärmte Wasser wird in einem Dampferzeuger j zu Dampf umgewandelt, welcher dem Schritt c2 zugeführt wird.

### Legende:

- bb: Ballen öffnen
- a: Behältersortierung
- b: Intensivwäsche
- fs: Flakeseparierung
- c1: Perkolation mit kalter Natronlauge
- c2: Erste Desodorierung mit Dampf
- d: Flakesortierung
- e: Extrusion und Granulierung
- f: Zweite Desodorierung
- g: Abwasserbehandlung
- h: Separierung
- i: Wärmetauscher
- j: Dampferzeuger
- k: Spülen und Entwässern

## Patentansprüche

1. Verfahren zum Recycling von Polyolefin-Behältern aufweisend die folgenden Verfahrensschritte
a) Behältersortierung,
b) Intensivwäsche mit Zerkleinerung der Behälter zu Flakes, Friktionswäsche und Dichtetrennung,
c) Reinigungsschritt,
d) Flakesortierung,
e) Extrusion und Granulierung der gereinigten Flakes,
**dadurch gekennzeichnet,**
**dass** der Reinigungsschritt
- c1) eine Perkolation der Flakes mit kalter Natronlauge bei einer Temperatur < 60 °C und
- c2) eine an den Schritt c1) anschliessende erste Desodorierung der Flakes mit Dampf umfasst.

2. Verfahren nach Anspruch 1 **dadurch gekennzeichnet, dass** der Dampf in Schritt c2) die Natronlauge von der Oberfläche der Flakes mitreisst.

3. Verfahren nach Anspruch 1 oder 2 **dadurch gekennzeichnet, dass** in einer Separierung h) die kontaminierte Natronlauge und der kontaminierte Dampf voneinander getrennt werden.

4. Verfahren nach einem der vorangehenden Ansprüche **dadurch gekennzeichnet, dass** nach dem Schritt e) eine zweite Desodorierung f) der Regranulate durchgeführt wird.

5. Verfahren nach einem der vorangehenden Ansprüche **dadurch gekennzeichnet, dass** das Abwasser der Intensivwäsche, die kontaminierte Natronlauge und der kontaminierte Dampf einer Abwasserbehandlung g) zugeführt werden.

6. Verfahren nach einem der vorangehenden Ansprüche **dadurch gekennzeichnet, dass** die Flakesortierung d) vor der Perkolation c1), nach der Perkolation c1) oder nach der ersten Desodorierung c2) durchgeführt wird.

7. Verfahren nach einem der vorangehenden Ansprüche **dadurch gekennzeichnet, dass** die Intensivwäsche b) mit Wasser bei einer Temperatur < 60°C durchgeführt wird.

8. Verfahren nach einem der vorangehenden Ansprüche **dadurch gekennzeichnet, dass** in einem Wärmetauscher i) der kontaminierte Dampf seine Restwärme an zur Dampferzeugung vorgesehenes Wasser zur Vorerwärmung abgibt.

9. Verfahren nach Anspruch 8 **dadurch gekennzeichnet, dass** das vorgewärmte Wasser in einem Dampferzeuger j) zu Dampf verdampft wird.

10. Verfahren nach einem der vorangehenden Ansprüche **dadurch gekennzeichnet, dass** die Flakes durch den Schritt c2) für den Schritt e) vorgewärmt werden.

11. Verfahren nach einem der vorangehenden Ansprüche **dadurch gekennzeichnet, dass** nach dem Schritt c) oder d) ein Spülen und Entwässern k) der Flakes erfolgt.

## Claims

1. A method for recycling polyolefin containers, comprising the following method steps:
a) container sorting,
b) intensive wash with comminution of the containers to form flakes, friction wash and density separation,
c) cleaning step,
d) flake sorting,
e) extrusion and granulation of the cleaned flakes,
**characterized in that**
the cleaning step comprises:
- c1) a percolation of the flakes with cold sodium hydroxide solution at a temperature of < 60 °C, and
- c2) a first deodorization of the flakes with steam carried out subsequently to step c1).

2. The method according to claim 1, **characterized in that** the steam in step c2) entrains the sodium hydroxide solution from the surface of the flakes.

3. The method according to claim 1 or 2, **characterized in that**, in a separation h), the contaminated sodium hydroxide solution and the contaminated steam are separated from one another.

4. The method according to any one of the preceding claims, **characterized in that**, after step e), a second deodorization f) of the regranulates is carried out.

5. The method according to one of the preceding claims, **characterized in that** the wastewater of the intensive wash, the contaminated sodium hydroxide solution and the contaminated steam are supplied to a wastewater treatment g).

6. The method according to any of the preceding claims, **characterized in that** the flake sorting d) is carried out before percolation c1), after percolation c1) or after the first deodorization c2).

7. The method according to any of the preceding claims, **characterized in that** the intensive washing b) is carried out with water at a temperature < 60 °C.

8. The method according to any of the preceding claims, **characterized in that**, in a heat exchanger i), the contaminated steam releases its residual heat to water provided for steam generation for preheating.

9. The method according to claim 8, **characterized in that** the preheated water is evaporated to steam in a steam generator j).

10. The method according to any of the preceding claims, **characterized in that** the flakes are preheated by the step c2) for the step e).

11. The method according to any of the preceding claims, **characterized in that**, after the step c) or d), rinsing and draining k) of the flakes takes place.

## Revendications

1. Procédé de recyclage de contenants en polyoléfine, comportant les étapes de procédé suivantes :
a) tri des contenants
b) lavage intensif en broyant les contenants pour les réduire en flocons, lavage à friction et séparation selon la densité,
c) étape de nettoyage
d) tri des flocons
e) extrusion des flocons nettoyés puis transformation en granulés
**caractérisé en ce que** l'étape de nettoyage comprend
c1) une percolation des flocons avec une solution d'hydroxyde de sodium froide à une température < 60 °C et
c2) suite à l'étape c1), une première désodorisation des flocons avec de la vapeur.

2. Procédé selon la revendication 1, **caractérisé en ce qu'**à l'étape c2), ladite vapeur entraîne la solution d'hydroxyde de sodium présente sur la surface des flocons.

3. Procédé selon les revendications 1 ou 2, **caractérisé en ce que**, dans un processus de séparation h), la solution d'hydroxyde de sodium contaminée est séparée de la vapeur contaminée.

4. Procédé selon l'une des revendications précédentes, **caractérisé en ce que**, suite à l'étape e), on réalise une seconde désodorisation f) des granulés nouvellement obtenus.

5. Procédé selon l'une des revendications précédentes, **caractérisé en ce que** les eaux usées issues du lavage intensif, la solution d'hydroxyde de sodium contaminée et la vapeur contaminée sont acheminées vers un processus de traitement d'eaux usées g).

6. Procédé selon l'une des revendications précédentes, **caractérisé en ce que** le tri des flocons d) est réalisé avant la percolation c1), après la percolation c1) ou après la première désodorisation c2).

7. Procédé selon l'une des revendications précédentes, **caractérisé en ce que** le lavage intensif b) est réalisé avec de l'eau à une température < 60 °C.

8. Procédé selon l'une des revendications précédentes, **caractérisé en ce que** la vapeur contaminée transfère, dans un échangeur de chaleur i), sa chaleur résiduelle à une eau destinée à la génération de vapeur.

9. Procédé selon la revendication 8, **caractérisé en ce que** l'eau préchauffée est évaporée dans un générateur de vapeur j) pour obtenir de la vapeur.

10. Procédé selon l'une des revendications précédentes, **caractérisé en ce que** l'étape c2) permet de préchauffer les flocons pour l'étape e).

11. Procédé selon l'une des revendications précédentes, **caractérisé en ce que**, suite à l'étape c) ou d), les flocons sont soumis à un processus de rinçage et d'essorage k).
